# EUROPEAN PATENT APPLICATION

(11) **EP 1 601 211 A2**
(43) Date of publication of application: **30.11.2005**
(21) Application number: 05010892.7
(22) Date of filing: 19.05.2005
(51) Int. Cl.: H04Q 7/08

(54) **Alternating paging scheme**

(30) Priority: 28.05.2004 US 857084
(71) Applicant: SYMBOL TECHNOLOGIES, INC., Holtsville, NY 11742 (US)
(72) Inventor: Fuccello, James, Patchogue, NY 11772 (US)
(74) Representative: Grünecker, Kinkeldey, Stockmair & Schwanhäusser Anwaltssozietät

(57) **Abstract**

Architecture to reduce or mitigate interference and performance degradation between a wireless local area network (WLAN) and a wireless personal area network (WPAN) device. The architecture defines a paging system that employs a modified paging sequence. Particularly, one aspect includes a frequency selection component, a packet scheduling component and a paging component. The frequency selection component defines a frequency protocol (*e.g.*, adaptive frequency hopping (AFH)), the packet scheduling component defines an alternating paging method (*e.g.*, alternating wireless media access (AWMA)) and the paging component employs the defined frequency protocol and the alternating paging method to generate a modified paging scheme. Additionally, the paging system can employ any non-collaborative frequency hopping protocol, collaborative paging method or channel mask to generate the modified paging sequence. When a connection is created, AWMA can be turned on and after the connection is removed, AWMA can be turned off.

## Description

### RELATED APPLICATION

This application is related to U.S. Patent Application Serial No. 10/835,784 filed on April 30, 2004, entitled "SYSTEM AND METHOD FOR COEXISTENCE IN WIRELESS NETWORKS" the entirety of which is incorporated herein by reference.

### TECHNICAL FIELD

This invention is related generally to computer systems, and more particularly to a system and/or method to reduce or mitigate interference and performance degradation between a wireless local area network (WLAN) and a wireless personal area network (WPAN) device.

### BACKGROUND OF THE INVENTION

With the technological advances in wireless networks, there is an ongoing and increasing need to reduce and/or mitigate interference and performance degradation caused by closely located or co-located devices operating in the same frequency bands.

Today, many different network devices operate in the 2.4 GHz radio frequency (RF) band known as the Industrial, Scientific and Medical (ISM) band. Co-located devices communicating in the ISM band run the risk of causing and/or encountering interference. By way of example, wireless personal area networks (WPAN), such as a Bluetooth®, operate in this ISM frequency spectrum. Additionally, wireless local area networks (WLAN) such as Home RF and the Institute of Electrical and Electronics Engineers (IEEE) 802.11b networks operate in the ISM band. This overlapping presence of competing devices can cause conflicts and collisions resulting in interference and performance degradation.

Bluetooth® technology was designed to enable communications between consumer electronic devices, such as computers, printers, and the like at relatively short-range (e.g., less than 30 feet) distances. Generally, a Bluetooth® radio system transmits and receives data using 79 predefined frequency bands. More particularly, the Bluetooth® standard employs a Frequency Hopping Spread Spectrum (FHSS) technique whereby each packet of data transmitted "hops" (e.g., switches) from one carrier frequency (e.g., channel) to another across its pre-determined frequency spectrum.

In accordance with the Bluetooth® standard, Bluetooth®-enabled devices are permitted to communicate at I of the 79 Bluetooth® specified frequencies between 2400 MHz and 2483.5 MHz for a short while and then must hop to another frequency in that band for further communications. The channels onto which Bluetooth devices are permitted to hop include 79 channels spaced 1 MHz apart in the 2400-2483.5 MHz frequency band.

On the other hand, the IEEE 802.1 1b standard employs a Direct Sequence Spread Spectrum (DSSS) technique whereby the IEEE 802.11b network occupies a dedicated bandwidth of approximately 22 MHz within the ISM spectrum. As a result, interference may be generated when each device attempts to occupy a common frequency band.

Traditionally, in an effort to avoid interference during transmission, WPAN (e.g., Bluetooth®) frequency hopping schemes employed pseudo-random hopping protocols to enable a device to hop from one channel to another without regard to whether a channel was "good" or "bad." Recently, various types of non-collaborative schemes (e.g., adaptive frequency hopping (AFH)) have been proposed which attempt to avoid fixed-frequency interferers (e.g., IEEE 802.1 1b) by calculating hops only onto "good" channels, and avoiding the "bad" channels. This AFH scheme, as defined in specification IEEE 802.15.2, dynamically changes the frequency hopping sequence in order to reduce and/or mitigate the interference encountered by the Bluetooth® device. The AFH specification IEEE 802.15.2 is hereby incorporated by reference in its entirety.

Currently, these mitigation schemes have only been directed to transmission following an already-established connection (e.g., post-connection). In other words, conventional interference mitigation schemes have not been directed to paging or inquiry time and have only employed these pseudo-random and AFH schemes once a successful connection was established. Today, prior to establishing a successful connection (e.g., upon connection and inquiry time), Bluetooth® devices utilize a fixed hopping sequence page creating the possibility of interference and/or performance degradation.

Although attempts have been made *via* AFH to reduce and/or mitigate the aforementioned concerns with respect to post-connection transmissions, there is still a substantial unmet need for a system and/or method that reduces or mitigates interference at connection and inquiry time.

### SUMMARY OF THE INVENTION

This invention relates to a system and/or method to reduce or mitigate interference and performance degradation between a wireless local area network (WLAN) and a wireless personal area network (WPAN) device.

The present invention disclosed and claimed herein, in one aspect thereof, defines a paging system that employs a modified paging sequence. Particularly, one aspect of the present invention includes a frequency selection component, a packet scheduling component and a paging component. More particularly, the frequency selection component defines a frequency protocol (*e.g.,* adaptive frequency hopping (AFH)), the packet scheduling component defines an alternating paging method (e.g., alternating wireless media access (AWMA)) and the paging component employs the defined frequency protocol and the alternating paging method to generate a modified paging scheme. Additionally, the paging system can employ any non-collaborative frequency hopping protocol, collaborative paging method or channel mask to generate the modified paging sequence.

Another aspect of the present invention includes a paging system having a synchronizing component to synchronize a wireless personal area network (WPAN) device to a beacon of a network (*e*.*g*., IEEE 802.11b). The 802.11 b beacon can be utilized to determine a suitable page timing sequence.

Yet another aspect of the present invention includes a loading component to collect frequency channel loading statistics which can be used by the packet scheduling component to determine a suitable page timing sequence.

In another embodiment, a WPAN device that generates a modified paging sequence is provided. The WPAN device includes a frequency component, a packet scheduling component and a paging component. The frequency component can be configured to generate a frequency hopping scheme (e.g., AFH). The packet scheduling component can be configured to establish a paging sequence (e.g., AWMA). Finally, the paging component can be suitably configured to employ the frequency scheme in accordance with the paging sequence to establish the modified paging sequence.

In another embodiment, the frequency hopping scheme employed by the WPAN device can include a channel mask to eliminate predetermined frequency channels. The WPAN device can further include a synchronizing component to synchronize the WPAN device to a network and a loading component to compile channel loading statistics used to establish the modified paging sequence.

Yet another aspect of the present invention provides for a method for generating an alternating paging sequence including the acts of generating a frequency scheme, establishing a paging sequence to define a timing interval, and employing the frequency scheme in accordance with the timing interval to generate the alternating paging sequence.

The method can further include an act of synchronizing to a network beacon in order to assist in defining a timing interval. As well, the act of establishing a paging sequence can further include an act of compiling channel loading statistics to incorporate into the alternating paging sequence. It will be appreciated that a computer readable medium having computer-executable instructions to perform the acts recited in the method can be provided.

Another embodiment of the present invention provides for a system for connecting to a remote device having means for identifying a selected frequency (e.g., AFH component); and means for alternating a paging signal (e.g., AWMA component). The system can further include means for transmitting the alternating paging signal.

To the accomplishment of the foregoing and related ends, certain illustrative aspects of the invention are described herein in connection with the following description and the annexed drawings. These aspects are indicative, however, of but a few of the various ways in which the principles of the invention can be employed and the present invention is intended to include all such aspects and their equivalents. Other advantages and novel features of the invention can become apparent from the following detailed description of the invention when considered in conjunction with the drawings.

### BRIEF DESCRIPTION OF THE DRAWINGS

FIG. 1 illustrates a general component block diagram of an adaptive paging component in accordance with an aspect of the invention.
FIG. 2 illustrates a flow chart of procedures to establish a modified paging sequence in accordance with an aspect of the disclosed invention.
FIG. 3 illustrates a network architectural diagram that illustrates representative network components in accordance with a disclosed embodiment.
FIG. 4 illustrates a component block diagram that identifies an adaptive frequency hopping (AFH) component operable to execute an aspect of the disclosed invention.
FIG. 5 illustrates a component block diagram that identifies an alternating wireless media access (AWMA) component operable to execute an aspect of the disclosed invention.
FIG. 6 illustrates an alternating timing sequence in accordance with an aspect of the disclosed invention.
FIG. 7 illustrates a system block diagram of a computer operable to execute the disclosed embodiment.
FIG. 8 illustrates a device operable to execute an aspect of the disclosed invention.

### DETAILED DESCRIPTION OF THE INVENTION

The present invention is now described with reference to the drawings, wherein like reference numerals are used to refer to like elements throughout. In the following description, for purposes of explanation, numerous specific details are set forth in order to provide a thorough understanding of the present invention. It can be evident, however, that the present invention can be practiced without these specific details. In other instances, well-known structures and devices arc shown in block diagram form in order to facilitate describing the present invention.

As used in this application, the terms "component" and "module" are intended to refer to a computer-related entity, either hardware, a combination of hardware and software, software, or software in execution. For example, a computer component or module can be, but is not limited to being, a process running on a processor, a processor, an object, an executable, a thread of execution, a program, and/or a computer. By way of illustration, both an application running on a server and the server can be a computer component. One or more computer components can reside within a process and/or thread of execution and a component can be localized on one computer and/or distributed between two or more computers.

As noted above, the present invention, in one aspect thereof, is directed toward a system and/or method to reduce or mitigate interference and performance degradation between competing wireless devices during connection and inquiry time. By way of example, the present invention is directed toward mitigating interference and/or performance degradation during connection and inquiry time of a wireless personal area network device (WPAN).

As explained above, conventional approaches to reduce and/or mitigate the aforementioned problems associated with competing and co-located devices have been directed to post-connection transmissions. The present invention is directed to a system and/or methodology to assist in the reduction or mitigation of interference (e.g., noise) and performance degradation during pre-connection time (e.g., paging, inquiry time). One basic premise of the present invention is to employ a frequency hopping scheme together with a packet scheduling protocol in order to mitigate disruptions during device connection and inquiry time.

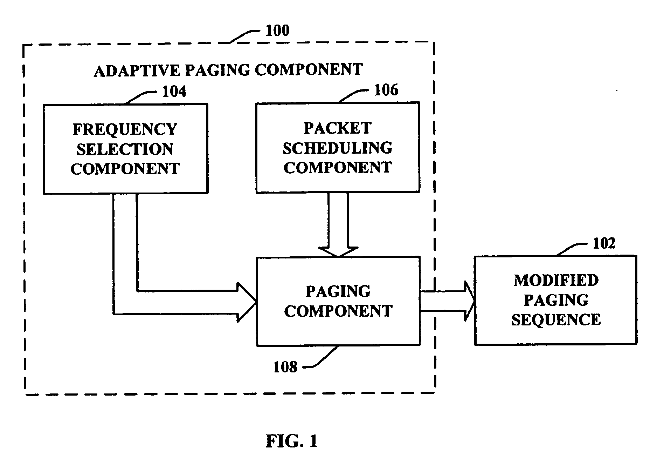

Referring initially to FIG. 1, a general block diagram of an adaptive paging component 100 in accordance with an aspect of the present invention is shown. For case of understanding, the adaptive paging component 100 will be described herein directed toward a remote WPAN (e.g., Bluetooth®) application. Although the Bluetooth® protocol has been primarily used to discuss the invention, it is to be appreciated that the adaptive paging component 100 can be applied to any known network protocol without departing from the scope of the invention described herein.

Generally, the adaptive paging component 100 can be suitably configured to generate a modified paging sequence 102 by employing a frequency selection component 102, an alternating wireless access (AWMA) component 104 and a paging component 106.

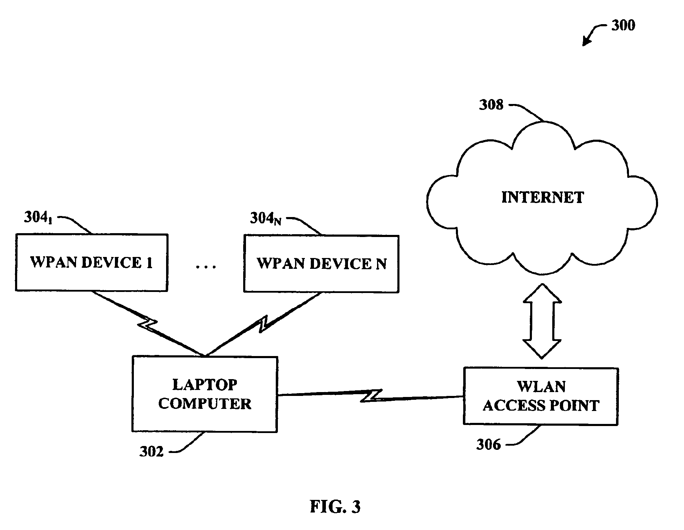

The frequency selection component 104 can be suitably configured to establish a frequency hopping protocol that can be incorporated into the modified paging scheme 102. By way of example, the frequency selection component 104 can be configured to utilize an AFH scheme enabling the adaptive paging component 100 to dynamically hop between frequencies to reduce or avoid collisions. The exemplary AFH scheme will be discussed in further detail with reference to FIG. 3 herein.

Although AFH is discussed in detail herein with respect to the frequency selection component 104, it is to be appreciated that any frequency selection protocol known in the art can be employed without departing from the spirit or scope of the present invention. Additionally, it will further be appreciated that a channel mask or the like can be utilized separately or in combination with a frequency selection protocol without departing from the disclosed invention.

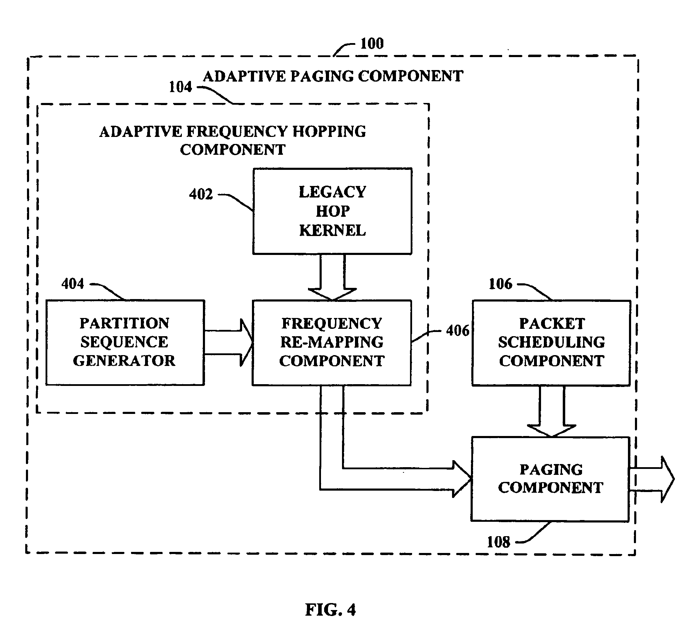

The packet scheduling component 106 can be suitably configured to establish a packet scheduling scheme in accordance with a defined criteria. By way of example, the packet scheduling scheme can be configured to employ an AWMA protocol as disclosed and claimed in the above-identified related application which is incorporated by reference herein. This AWMA protocol can be configured to selectively toggle (*e*.*g*., alternate) the transmission of packets between devices during connection and/or inquiry time. The exemplary AWMA protocol will be discussed in greater detail with reference to FIG. 4 herein.

Finally, the paging component 108 can be suitably configured to utilize the established frequency protocol output from the frequency selection component 104 together with the packet scheduling scheme established by the packet scheduling component 106 to generate the modified paging sequence 102. In other words, the paging component 108 can be configured to combine these two schemes thereby generating the modified paging sequence 102.

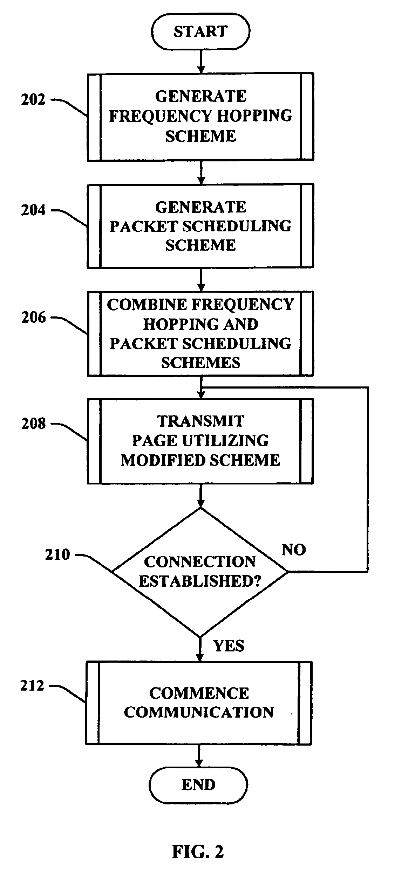

FIG. 2 illustrates a methodology for establishing a modified paging sequence in accordance with an aspect of the present invention. While, for purposes of simplicity of explanation, the methodology shown herein, e.g., in the form of a flow chart, is shown and described as a series of acts. It is to be understood and appreciated that the present invention is not limited by the order of acts, as some acts can, in accordance with the present invention, occur in different orders and/or concurrently with other acts from those shown and described herein. For example, those skilled in the art will understand and appreciate that a methodology could alternatively be represented as a series of interrelated states, such as in a state diagram. Moreover, not all illustrated acts can be required to implement a methodology in accordance with an aspect the present invention.

Referring to FIG. 2, and proceeding to 202, a frequency hopping scheme is generated. As described above, the exemplary AFH scheme can be generated. Those skilled in the art will appreciate the acts included in the establishment of the known AFH scheme.

At 204, the system can be configured to generate a packet scheduling scheme. By way of example, the system can be suitably configured to generate an AWMA protocol as described in the above-identified related application. It is to be appreciated that the AWMA protocol can be configured to employ any desired alternating or scheduling method of transmission.

At 206, the frequency hopping and packet scheduling schemes are combined to establish a modified page sequence. At 208, the system can be suitably configured to transmit a page or inquiry to search for a compatible device utilizing the modified paging scheme and corresponding interval timing sequence.

Now proceeding to 210, the system determines if a successful connection is established. If the system determines that a successful connection is not established, the system returns to 208 and transmits another page or inquiry in search of a compatible device. On the other hand, if the system determines that a connection is established at 210, the system commences communication at 212. It will be appreciated that when a connection is created, AWMA can be turned on and after the connection is removed, AWMA can be turned off.

With reference now to FIG. 3, system 300 generally illustrates the architecture of a wireless computing environment in accordance with an aspect of the present invention. As illustrated in FIG. 3, a master WPAN-enabled (e.g., Bluetooth®) device 302 is illustrated. It will be appreciated that the master WPAN device 302 can be any device or component capable of transmitting and/or receiving data *via* a WPAN such as any one of numerous wireless devices, including, but not limited to, a handheld terminal device, laptop/notebook computer, electronic tablet, personal digital assistant, peripheral device or the like. One aspect of the present invention provides for a Bluetooth® WPAN device. Moreover, it is to be appreciated that the invention can employ any WPAN protocol capable of wireless transmission protocol for carrying out the functionality described herein, and the scope of the hereto appended claims are intended to cover such applications and features.

Continuing with the example of FIG. 3, device 302 can also be WLAN-enabled (e.g., IEEE 802.1 1b). As discussed herein, the co-location of the WPAN and WLAN device and/or networks could lead to interference or performance degradation. Of course, interference collisions could occur even if the devices are not physically co-located. In other words, FIG. 3 is illustrative of one exemplary aspect of the present invention whereby the devices/networks (e.g., Bluetooth® and IEEE 802.1 1b) are co-located within a common device (e.g., 302). It will be understood that interference between devices and/or networks can occur as a result of any number of known factors including, but not limited to, a substantially close physical proximity.

System 300 generally includes WPAN slave devices (e.g., remote devices) 304, to 304_{N}, where N is an integer. The remote devices 304_{I} through 304_{N} are referred to collectively as the remote devices 304. It will appreciated that WPAN remote devices 304 can be any device or component capable of transmitting and/or receiving data *via* a WPAN (e.g., Bluetooth®) such as any one of numerous wireless devices, including, but not limited to, a handheld terminal device, laptop/notebook computer, electronic tablet, personal digital assistant, peripheral device or the like. Although the invention has been primarily described within the context of Bluetooth® remote slave devices 304, it is to be appreciated that the invention can be applied to any protocol capable of wireless transmission.

Continued reference to FIG. 3 illustrates that the system 300 can include a WLAN (*e.g.*, IEEE 802.11b) node or access point 306. The access point 306 can be configured to enable WLAN-equipped device 302 to access a remote network (*e*.*g*., Internet 308) *via* an IEEE 802.11b wireless connection. As illustrated in FIG. 3, the access point 306 can be configured to provide a communicative transition point between the device 302 and the Internet 308.

Although the embodiments of the present system and method described herein are directed toward specific wireless networks (*e.g.*, Bluetooth®, IEEE 802.11b), it will be appreciated that the present concepts and innovations described herein can be applied to any alternate wireless network protocol (*e.g.,* Home RF) known in the art without departing from the spirit, scope and/or functionality of the present invention.

Referring now to FIG. 4, a block diagram of an exemplary adaptive paging component 100 in accordance with one aspect of the present invention is shown. As illustrated, adaptive paging component 100 includes frequency selection component 104, a packet scheduling component 106 and a paging component 108.

With respect to the frequency selection component 104, one embodiment can be suitably configured to utilize an AFH component 104 as illustrated. In addition to the brief description that follows, those skilled in the art will appreciate the functionality of the individual components included within the AFH component 104.

As shown in the block diagram of FIG. 1, the AFH component 104 can include three distinct components. Specifically, the AFH component 104 can include a legacy hop kernel 402 and a partition sequence generator 404 coupled by a frequency re-mapping component 406 as illustrated.

The first module of the AFH component 104, the legacy hop kernel 402, can be configured to generate the original hopping sequence defined by the Bluetooth® standard. The term "legacy" is intended to imply that the kernel 402 is a hop kernel that is well-known such as the hop kernel defined in the Bluetooth® standard. It is to be appreciated that other types of hop kernels can be employed without departing from the spirit and/or scope of the present invention.

The second module, the partition sequence generator 404, can be configured to impose a structure on the original hopping sequence which will be understood to contain both "good" and "bad" channels.

The output of the partition sequence generator 402 is then used as an input to the final module of the AFH component 104, the frequency re-mapping component 406. The frequency re-mapping component 406 utilizes the output of the legacy hop kernel 402 and the partition sequence generator 404 to generate an adapted hopping sequence with the appropriate structure. It will be appreciated that the frequency re-mapping component 406 can re-map the hopping frequency produced by the legacy kernel uniformly onto the set defined by the partition sequence.

It will be appreciated that AFH enables Bluetooth® devices to adapt to the RF environment through identifying fixed sources of interference (*e*.*g*., IEEE 802.11b networks) through means such as channel assessment. Subsequently, the Bluetooth® devices exclude these fixed sources of interference from the list of available channels thereby reducing or eliminating collisions and interference.

Although the exemplary frequency selection component 104 employs an AFH scheme, it will be appreciated that alternate aspects of the present invention can be effected *via* any suitable frequency selection technique known in the art.

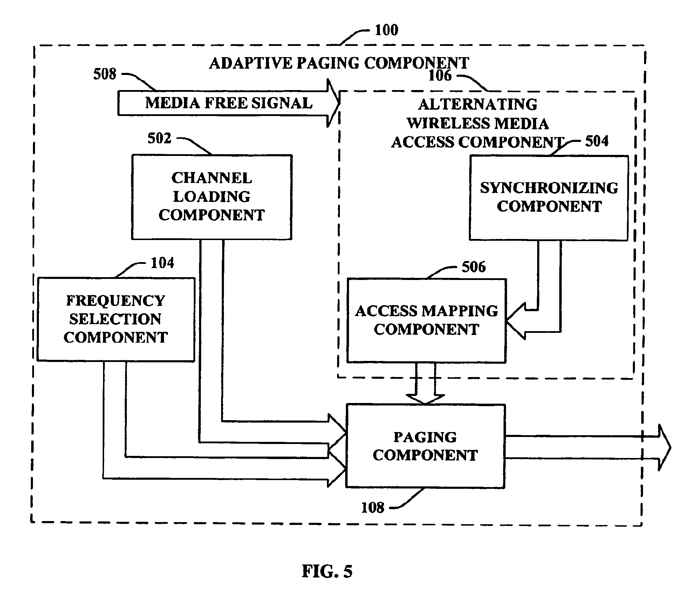

Now with reference to FIG. 5, a block diagram of an exemplary adaptive paging component 100 in accordance with an aspect of the present invention is shown. As illustrated, the adaptive paging component 100 includes a frequency selection component 104, a packet scheduling component 106, a loading component 502, and a paging component 108.

With respect to the packet scheduling component 106, one embodiment can be suitably configured to utilize an AWMA component 106 as illustrated. Although illustrated as an AWMA component in this FIG. 5, it is to be appreciated that the AWMA component can be any paging scheme (e.g., BT). It is also to be appreciated that the AWMA component 106 can suitably utilize a WLAN access point beacon to prevent one radio from concurrently transmitting when another radio is transmitting. By way of example, an IEEE 802.11b beacon can be utilized to synchronize and identify alternating transmission intervals of the IEEE 802.11b and Bluetooth®devices.

The AWMA component 106 can include the two individual components, as illustrated in the block diagram. Specifically, the AWMA component 106 can include a a synchronizing component 504 coupled by an access mapping component 506 as illustrated.

It will be appreciated that a channel loading component 502 can be configured to compile frequency parameters. These parameters can subsequently be used by the paging component 108 to determine suitable operation parameters. By way of example, the loading component 502 can be configured to compile channel loading statistics related to an IEEE 802.11b and Bluetooth® network. Accordingly, if a determination is made from the loading statistics that the IEEE 802.11b should not be interrupted, the Bluetooth® connection and/or inquiry could be postponed or shut down until the current IEEE 802.11b session has ended.

The synchronizing component 504 as illustrated in FIG. 5 can be suitably configured to synchronize to a network (e.g., IEEE 802.1 1b) beacon. The output of the synchronizing component 504 becomes an input to the access mapping component 506 to generate an appropriate alternating paging sequence. This alternating paging sequence is input into the paging component 108 together with the output of the frequency selection component (e.g.. AFH sequence) to generate the modified paging scheme.

It will be appreciated that when the media free signal 508 is introduced at a logical high and low levels to control the AWMA component 106.

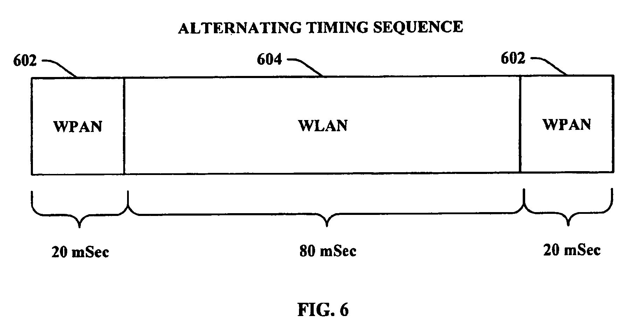

FIG. 6 illustrates an exemplary beacon frame or alternating timing sequence in accordance with a disclosed aspect of the present invention. By way of example, and as illustrated in FIG. 6, the system can be suitably configured to schedule packets by alternating transmissions between the WPAN and WLAN devices based upon the timing of a WLAN access point beacon (e.g., 100 milliseconds). It will be appreciated that both the beacon period and the AWMA duty cycle are adjustable. The exemplary beacon period and duty cycle are one way of using the system. It depends on whether more bandwidth is needed on Bluetooth® or 802.11b. In one implementation, at connection time Bluetooth® can be given more bandwidth. In an alternate embodiment, the 802.11b can be given more bandwidth.

As shown in FIG. 6, in one aspect of the present invention, a WPAN device includes an interval 602 of 20 milliseconds. Accordingly, the WLAN can include an interval 604 of 80 milliseconds. As illustrated, this alternating sequence can suitably repeat throughout the paging/inquiry cycle in order to reduce or mitigate the possibility of collisions or network performance degradation.

The exemplary interval cycle of 20/80 milliseconds repeating every 100 milliseconds is in accordance to a network beacon frame of 100 milliseconds. Moreover, this exemplary alternating technique can suitably permit the WLAN and WPAN devices sufficient time to recover from interruption thus, mitigating noise or performance degradation. Although the invention has been discussed within the context of an exemplary network beacon frame of 100 milliseconds, it is to be appreciated that the invention is implementation specific whereby alternative timing sequences and time intervals can be employed without departing from the spirit and/or scope of the present invention. For example, the system can be configured to be exclusively dedicated to one network over the other based upon the relative beacon frame and intervals.

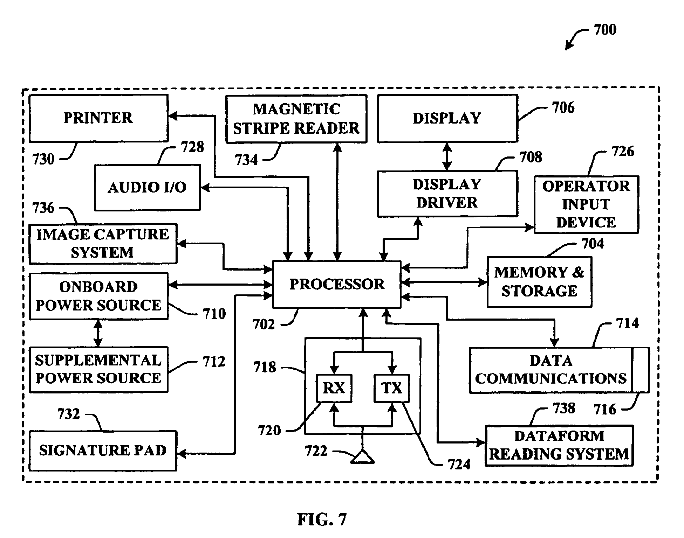

In order to provide a context for the various aspects of the invention, FIG. 7 and the following discussion are intended to provide a brief, general description of a suitable computing environment in which the various aspects of the present invention can be implemented. While the invention has been described above in the general context of computer-executable instructions of a computer program that runs on a computer and/or computers, those skilled in the art will recognize that the invention also can be implemented in combination with other program modules. Generally, program modules include routines, programs, components, data structures, etc. that perform particular tasks and/or implement particular abstract data types.

Moreover, those skilled in the art will appreciate that the inventive methods can be practiced with other computer system configurations, including single-processor or multiprocessor computer systems, minicomputers, mainframe computers, as well as personal computers, hand-held computing devices, microprocessor-based or programmable consumer electronics, and the like. The illustrated aspects of the invention can also be practiced in distributed computing environments where tasks arc performed by remote processing devices that are linked through a communications network. However, some, if not all aspects of the invention can be practiced on stand-alone computers. In a distributed computing environment, program modules can be located in both local and remote memory storage devices.

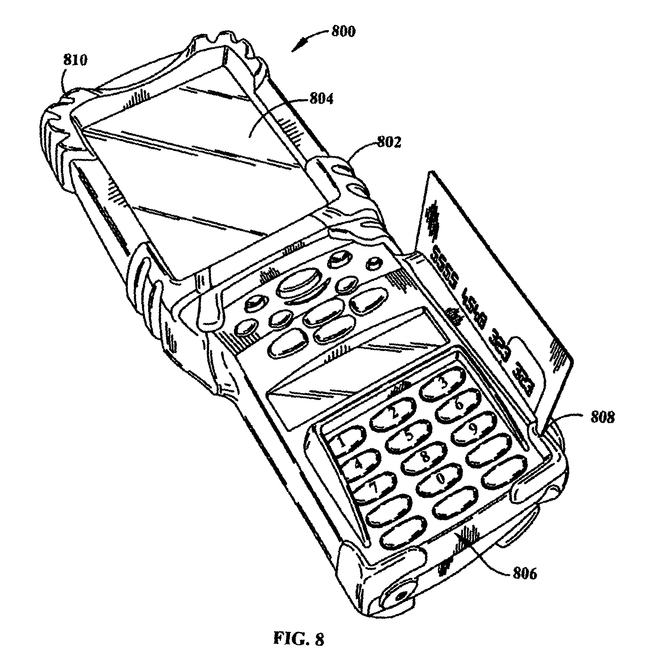

Referring now to FIG. 7, there is illustrated a schematic block diagram of a portable hand-held terminal device 700 (similar to the portable scanning device 800 as illustrated in FIG. 8) according to one aspect of the present invention, in which a processor 702 is responsible for controlling the general operation of the device 700. The processor 702 is programmed to control and operate the various components within the device 700 in order to carry out the various functions described herein. The processor 702 can be any of a plurality of suitable processors. The manner in which the processor 702 can be programmed to carry out the functions relating to the present invention will be readily apparent to those having ordinary skill in the art based on the description provided herein.

A memory 704 connected to the processor 702 serves to store program code executed by the processor 702, and also serves as a storage means for storing information such as receipt transaction information and the like. The memory 704 can be a non-volatile memory suitably adapted to store at least a complete set of the information that is displayed. Thus, the memory 704 can include a RAM or flash memory for high-speed access by the processor 702 and/or a mass storage memory, e.g., a micro drive capable of storing gigabytes of data that comprises text, images, audio, and video content. According to one aspect, the memory 704 has sufficient storage capacity to store multiple sets of information, and the processor 702 could include a program for alternating or cycling between various sets of display information.

A display 706 is coupled to the processor 702 *via* a display driver system 708. The display 706 can be a color liquid crystal display (LCD), plasma display, or the like. In this example, the display 706 is a ¼ VGA display with sixteen levels of gray scale. The display 706 functions to present data, graphics, or other information content. For example, the display 706 can display a set of customer information, which is displayed to the operator and can be transmitted over a system backbone (not shown). Additionally, the display 706 can display a variety of functions that control the execution of the device 700. The display 706 is capable of displaying both alphanumeric and graphical characters.

Power is provided to the processor 702 and other components forming the hand-held device 700 by an onboard power system 710 (*e.g.,* a battery pack). In the event that the power system 710 fails or becomes disconnected from the device 700, a supplemental power source 712 can be employed to provide power to the processor 702 and to charge the onboard power system 710. The processor 702 of the device 700 induces a sleep mode to reduce the current draw upon detection of an anticipated power failure.

The terminal 700 includes a communication subsystem 714 that includes a data communication port 716, which is employed to interface the processor 702 with a remote computer. The port 716 can include at least one of Universal Serial Bus (USB) and IEEE 1394 serial communications capabilities. Other technologies can also be included, for example, infrared communication utilizing an infrared data port.

The device 700 can also include a radio frequency (RF) transceiver section 718 in operative communication with the processor 702. The RF section 718 includes an RF receiver 720, which receives RF signals from a remote device *via* an antenna 722 and demodulates the signal to obtain digital information modulated therein. The RF section 718 also includes an RF transmitter 724 for transmitting information to a remote device, for example, in response to manual user input *via* a user input device 726 (e.g., a keypad) or automatically in response to the completion of a transaction or other predetermined and programmed criteria. The transceiver section 718 facilitates communication with a transponder system, for example, either passive or active, that is in use with product or item RF tags. The processor 702 signals (or pulses) the remote transponder system *via* the transceiver 718, and detects the return signal in order to read the contents of the tag memory. In one implementation, the RF section 718 further facilitates telephone communications using the device 700. In furtherance thereof, an audio I/O section 728 is provided as controlled by the processor 702 to process voice input from a microphone (or similar audio input device) and audio output signals (from a speaker or similar audio output device). In another implementation, the device 700 can provide voice recognition capabilities such that when the device 700 is used simply as a voice recorder, the processor 702 can facilitate high-speed conversion of the voice signals into text content for local editing and review, and/or later download to a remote system, such as a computer word processor. Similarly, the converted voice signals can be used to control the device 700 instead of using manual entry *via* the keypad 726.

Onboard peripheral devices, such as a printer 730, signature pad 732, and a magnetic strip reader 734 can also be provided within the housing of the device 700 or accommodated externally through one or more of the external port interfaces 716.

The device 700 can also include an image capture system 736 such that the user can record images and/or short movies for storage by the device 700 and presentation by the display 706. Additionally, a dataform reading system 738 is included for scanning dataforms. It is to be appreciated that these imaging systems (736 and 738) can be a single system capable of performing both functions.

FIG. 8 is provided to assist in understanding and to provide context to an embodiment of the present invention. Specifically, FIG. 8 illustrates an example of a handheld terminal 800 in accordance with an aspect of the present invention.

The handheld terminal 800 includes a housing 802 which can be constructed from a high strength plastic, metal, or any other suitable material. The handheld terminal 800 includes a display 804. As is conventional, the display 804 functions to display data or other information relating to ordinary operation of the handheld terminal 800 and/or mobile companion (not shown). For example, software operating on the handheld terminal 800 and/or mobile companion can provide for the display of various information requested by the user. Additionally, the display 804 can display a variety of functions that are executable by the handheld terminal 800 and/or one or more mobile companions. The display 804 provides for graphics based alpha-numerical information such as, for example, the price of an item requested by the user. The display 804 also provides for the display of graphics such as icons representative of particular menu items, for example. The display 804 can also be a touch screen, which can employ capacitive, resistive touch, infrared, surface acoustic wave, or grounded acoustic wave technology.

The handheld terminal 800 further includes user input keys 806 for allowing a user to input information and/or operational commands. The user input keys 806 can include a full alphanumeric keypad, function keys, enter keys, etc. The handheld terminal 800 can also include a magnetic strip reader 808 or other data capture mechanism (not shown). An electronic signature apparatus can also be employed in connection with the magnetic strip reader or a telecheck system.

The handheld terminal 800 can also include a window 810 in which a bar code reader/bar coding imager is able to read a bar code label, or the like, presented to the handheld terminal 800. The handheld terminal 800 can include a light emitting diode (LED) (not shown) that is illuminated to reflect whether the bar code has been properly or improperly read. Alternatively, or additionally, a sound can be emitted from a speaker (not shown) to alert the user that the bar code has been successfully imaged and decoded. The handheld terminal 800 also includes an antenna (not shown) for wireless communication with a radio frequency (RF) access point; and an infrared (IR) transceiver (not shown) for communication with an IR access point.

What has been described above includes examples of the present invention. It is, of course, not possible to describe every conceivable combination of components or methodologies for purposes of describing the present invention, but one of ordinary skill in the art can recognize that many further combinations and permutations of the present invention are possible. Accordingly, the present invention is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A paging system that employs a modified paging sequence, the system comprising:
a frequency selection component that defines a frequency protocol;
a packet scheduling component that defines an alternating paging method; and
a paging component that employs the defined frequency protocol and the alternating paging method to generate the modified paging scheme.

2. The paging system set forth in claim 1, wherein the alternating paging method is an alternating wireless media access (AWMA) paging method.

3. The paging system set forth in claim 1, wherein the frequency protocol is a non-collaborative frequency hopping protocol.

4. The paging system set forth in claim 1, wherein the frequency protocol is an adaptive frequency hopping (AFH) scheme.

5. The paging system set forth in claim 1, wherein the frequency protocol employs a channel mask.

6. The paging system set forth in claim 1, wherein the alternating paging method is a collaborative paging method.

7. The paging system set forth in claim 1, further comprising a synchronizing component to synchronize a wireless personal area network (WPAN) device to a 802.1 1b beacon of a network.

8. The paging system set forth in claim 7, wherein the packet scheduling component employs the beacon to determine a page timing sequence.

9. The paging system set forth in claim 7, wherein the network is an IEEE 802.11b wireless local area network (WLAN).

10. The paging system set forth in claim 1, further comprising a loading component to collect frequency channel loading statistics.

11. The paging system set forth in claim 10, wherein the packet scheduling component employs the frequency channel loading statistics to determine a page timing sequence.

12. The paging system set forth in claim 1, wherein the alternating paging method is a collaborative alternating paging method.

13. A WPAN device that generates a modified paging sequence, the WPAN device comprising:
a frequency component that generates a frequency hopping scheme;
a packet scheduling component that establishes a paging sequence; and
a paging component that employs the frequency scheme in accordance with the paging sequence to establish the modified paging sequence.

14. The WPAN device set forth in claim 13, wherein the frequency hopping scheme is an adaptive frequency hopping scheme.

15. The WPAN device set forth in claim 13, wherein the paging sequence is established *via* an AWMA protocol.

16. The WPAN device set forth in claim 13, wherein the frequency hopping scheme includes a channel mask.

17. The WPAN device set forth in claim 13, further comprising a synchronizing component to synchronize the WPAN device to a network.

18. The WPAN device set forth in claim 13, further comprising a loading component to compile channel loading statistics.

19. The system set forth in claim 17, wherein the packet scheduling component employs the channel loading statistics to establish the modified paging sequence.

20. A method for generating an alternating paging sequence, the method comprising:
generating a frequency scheme;
establishing a paging sequence to define a timing interval;
employing the frequency scheme in accordance with the timing interval to generate the alternating paging sequence.

21. The method set forth in claim 20, further comprising defining a timing interval to toggle the alternating paging sequence.

22. The method set forth in claim 21, wherein the act of defining a timing interval comprises synchronizing to a network beacon.

23. The method set forth in claim 20, wherein the act of establishing a paging sequence comprises compiling channel loading statistics to incorporate into the alternating paging sequence.

24. A computer readable medium having computer-executable instructions to perform the acts recited in claim 20.

25. A system for connecting to a remote device, the system comprising:
means for identifying a selected frequency; and
means for alternating a paging signal.

26. The system set forth in claim 25, wherein the means for identifying a selected frequency is an AFH component.

27. The system set forth in claim 23, wherein the means for alternating a paging signal is an AWMA method.

28. The system set forth in claim 23, further comprising means for transmitting the alternating paging signal.
